# EUROPEAN PATENT APPLICATION

(11) **EP 2 629 567 A1**
(43) Date of publication of application: **21.08.2013**
(21) Application number: 11777257.4
(22) Date of filing: 28.05.2011
(51) Int. Cl.: H04W 28/24

(54) **METHOD, DEVICE AND SYSTEM FOR MANAGING QUALITY OF SERVICE**

(30) Priority: 26.11.2010 CN 201010575925
(71) Applicant: Huawei Technologies Co., Ltd., Shenzhen, Guangdong 518129 (CN)
(72) Inventor: CHEN, Jing, Guangdong 518129 (CN); YE, Xiaobing, Guangdong 518129 (CN)
(74) Representative: Epping - Hermann - Fischer
(86) International application number: PCT/CN2011/074831
(87) International publication number: WO 2011/137838

(57) **Abstract**

Embodiments of the present invention pertain to the communications field and disclose a method, device, and system for managing quality of service. The method includes: receiving a service request; determining, according to configuration information, devices participating in negotiation on quality of service; and determining, according to a negotiation result of the devices participating in negotiation on quality of service, quality of service corresponding to the service request. The device includes: a receiving module, a first determining module and a second determining module. In the embodiments of the present invention, devices participating in negotiation on quality of service are determined according to configuration information, and the corresponding quality of service is determined according to the negotiation result of the devices participating in negotiation on quality of service, thereby not being limited to the subscription result of the HLR, and implementing flexible management for quality of service.

## Description

This application claims priority to Chinese Patent Application No. CN201010575925.0, filed on November 26, 2010 and entitled "METHOD, DEVICE, AND SYSTEM FOR MANAGING QUALITY OF SERVICE", which is incorporated herein by reference in its entirety.

### FIELD OF THE INVENTION

The present invention relates to the communication field, and in particular, to a method, device, and system for managing quality of service.

### BACKGROUND OF THE INVENTION

Nowadays, as packet data services are developing constantly, content based services attract attention from more and more people, and people are increasingly concerned about the experience of quality of service. According to different services, requirements for quality of service are also different. Therefore, quality of service needs to be effectively managed.

In systems such as a GPRS (General Packet Radio Service, general packet radio service) system and a UMTS (Universal Mobile Telecommunications System, universal mobile telecommunications system), when managing quality of service, an SGSN (Serving GPRS Support Node, serving GPRS support node) negotiates the final QoS of the service by comparing parameters such as QoS (Quality of Service, quality of service) subscribed in an HLR (Home Location Register, home location register), QoS requested by devices such as a GGSN (Gateway GPRS Support Node, gateway GPRS support node) or an RNC (Radio Network Controller, radio network controller)/BSC (Base Station Controller, base station controller), and QoS configured in the SGSN itself.

Therefore, currently the QoS negotiation is limited to the subscription result of the HLR and so on. If subscription data of higher quality of service cannot be subscribed in the HLR, even if an MS (Mobile Station, mobile terminal), an RNC/BSC, and a network side can negotiate better quality of service classes, or the network side can detect that a user requires better quality of service, the user cannot obtain better quality of service, resulting in poor flexibility in managing quality of service; in addition, after the user roams to an area that can support better quality of service, the highest quality of service will also be restricted by subscription data, further restricting the user from experiencing better services.

### SUMMARY OF THE INVENTION

To implement flexible management for quality of service, embodiments of the present invention provide a method, device, and system for managing quality of service. The technical solutions are as follows:

In one aspect, a method for managing quality of service is provided, where the method includes:
receiving a service request;
determining, according to configuration information, devices participating in negotiation on quality of service; and
determining, according to a negotiation result of the devices participating in negotiation on quality of service, quality of service corresponding to the service request.

In another aspect, a device for managing quality of service is provided, where the device includes:
a receiving module, configured to receive a service request;
a first determining module, configured to: after the receiving module receives the service request, determine, according to configuration information, devices participating in negotiation on quality of service; and
a second determining module, configured to determine, according to a negotiation result of the devices participating in negotiation on quality of service which are determined by the first determining module, quality of service corresponding to the service request.

In another aspect, a system for managing quality of service is provided, where the system includes the above device for managing quality of service.

The technical solutions of the embodiments of the present invention have the following beneficial effects:

Devices participating in negotiation on quality of service are determined according to configuration information, and the corresponding quality of service is determined according to the negotiation result of the devices participating in negotiation on quality of service, thereby not being limited to the subscription result of the HLR, and implementing flexible management for quality of service.

### BRIEF DESCRIPTION OF THE DRAWINGS

To describe the technical solutions in the embodiments of the present invention more clearly, the following briefly introduces the accompanying drawings required for describing the embodiments of the present invention. Apparently, the accompanying drawings in the following description show merely some embodiments of the present invention, and persons of ordinary skill in the art may still derive other drawings from these accompanying drawings without creative efforts.

FIG. 1 is a flowchart of a method for managing quality of service according to a first embodiment of the present invention;

FIG. 2 is a flowchart of a method for managing quality of service according to a second embodiment of the present invention;

FIG. 3 is a flowchart of a method for managing quality of service according to a third embodiment of the present invention;

FIG. 4 is a schematic structural diagram of a device for managing quality of service according to a fourth embodiment of the present invention; and

FIG. 5 is a schematic structural diagram of a determining module according to the fourth embodiment of the present invention.

### DETAILED DESCRIPTION OF THE EMBODIMENTS

To describe the objectives, technical solutions, and advantages of the present invention more clearly, the following further describes the embodiments of the present invention in detail with reference to the accompanying drawings.

### Embodiment 1

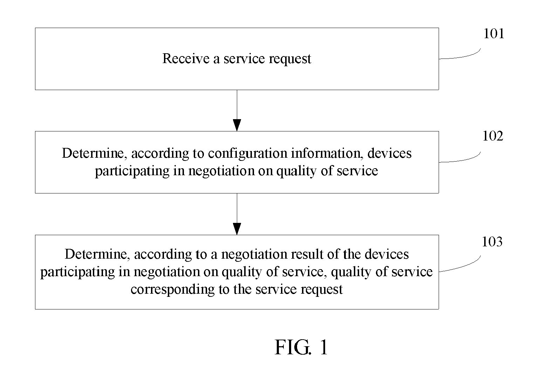

Referring to FIG. 1, this embodiment provides a method for managing quality of service, and the procedure of the method is as follows:

101: Receive a service request.

102: Determine, according to configuration information, devices participating in negotiation on quality of service.

103: Determine, according to a negotiation result of the devices participating in negotiation on quality of service, quality of service corresponding to the service request.

The service request includes but is not limited to an activation request, a secondary activation request, a routing area update request, an update PDP (Package Data Protocol, package data protocol) context request initiated by an MS, an update PDP context request initiated by a GGSN, and an update PDP context request initiated by an SGSN, which are not limited by this embodiment.

Specifically, the configuration information may be obtained according to a user-negotiated subscription configuration table, or may be obtained by other means, which are not limited by this embodiment.

For example, the device managing quality of service is an SGSN. Certainly, the device managing quality of service may also be a GGSN, a PCRF (Policy and Charging Rules Function, policy and charging rules function), an RNC, and so on, which are not limited by this embodiment. The user-negotiated subscription configuration table may be configured on the SGSN beforehand, and after the SGSN receives the service request, the SGSN can obtain the corresponding configuration information by querying the user-negotiated subscription configuration table configured on the SGSN. It should be noted that, when the SGSN receives a service request initiated by any user equipment, the SGSN can obtain the configuration information by querying the user-negotiated subscription configuration table configured on the SGSN.

The determining, by the SGSN, according to configuration information, devices participating in negotiation on quality of service, includes:
determining, by the SGSN, according to the configuration information, whether the devices participating in negotiation on quality of service are indicated by a request initiating device; and
if so, determining, according to the indication of the request initiating device, the devices participating in negotiation on quality of service; or
if not, determining, according to an indication in the configuration information, the devices participating in negotiation on quality of service.

Further, the determining, by the SGSN, according to the configuration information, whether the devices participating in negotiation on quality of service are indicated by a request initiating device, includes:
determining whether the configuration information carries a parameter identifier indicated by the requesting device; and
if so, determining that the devices participating in negotiation on quality of service are indicated by the request initiating device.

Further, if the SGSN determines, according to the indication of the request initiating device, the devices participating in negotiation on quality of service, the method further includes:
if the request initiating device does not indicate the devices participating in negotiation on quality of service, determining, by the SGSN, according to an indication of a home location register, the devices participating in negotiation on quality of service.

Further, if the SGSN determines, according to the indication of the home location register, the devices participating in negotiation on quality of service, the method further includes:
if the home location register does not indicate the devices participating in negotiation on quality of service, determining, by the SGSN, according to the indication in the configuration information, the devices participating in negotiation on quality of service.

By using the method provided by this embodiment, devices participating in negotiation on quality of service are determined according to configuration information, and the corresponding quality of service is determined according to the negotiation result of the devices participating in negotiation on quality of service, thereby not being limited to the subscription result of the HLR. Therefore, flexible management is implemented for quality of service, better quality of service is provided to the user, and the user experience is improved.

### Embodiment 2

This embodiment provides a method for managing quality of service. To make the SGSN not be limited to the negotiation result of QoS requested by devices such as the MS/GGSN, QoS subscribed in the HLR, and QoS configured on the SGSN, the method, under the condition of satisfying the SGSN configuration scenario, can be used to implement configuration according to the negotiation result of one or more of: the QoS requested by the MS/GGSN, QoS subscribed in the HLR, and QoS configured on the SGSN. Therefore, the SGSN involved in this embodiment has a user unitized subscription negotiation function, and therefore implements flexible management for quality of service without being limited to the subscription result of the HLR.

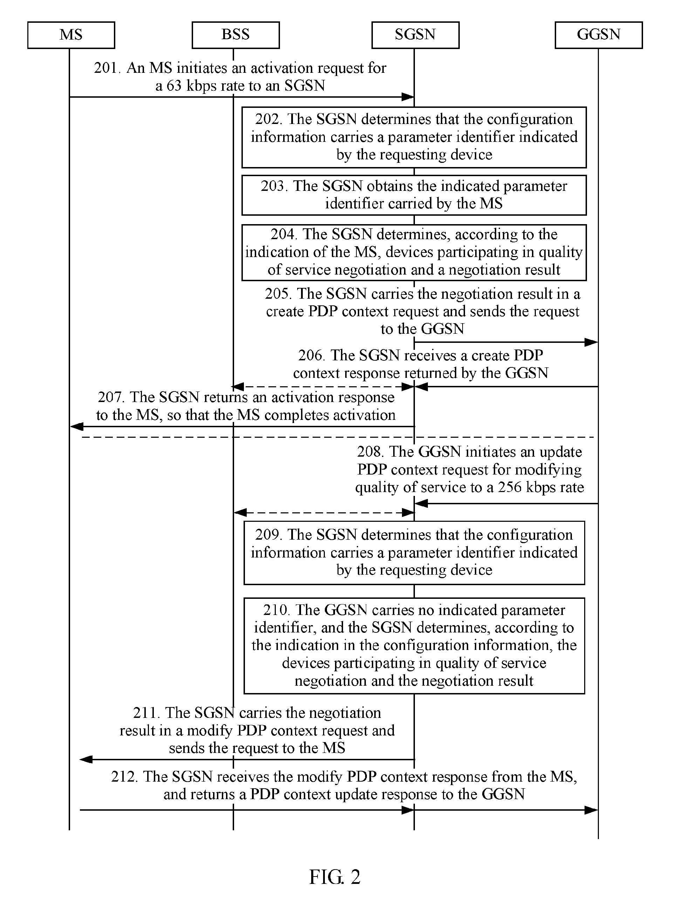

For ease of description, in this embodiment, the method provided by this embodiment is described in detail by using an example in which an MS with an IMSI (International Mobile Subscriber Identification Number, international mobile subscriber identification number) 13816000001 in a GPRS system initiates an activation request to the SGSN and the SGSN manages quality of service. Referring to FIG. 2, the procedure of the method provided by this embodiment is as follows:

201: The MS initiates an activation request for a 63 kbps rate to an SGSN.

With respect to this step, this embodiment neither limits the mode and scenario of initiating an activation request by the MS, nor limits the specific quality of service requested by the MS. Herein, the QoS requested in the activation request of the MS is a 63 kbps rate, which is only used as an example for description.

202: The SGSN determines that the configuration information carries a parameter identifier indicated by the requesting device.

After receiving the activation request, the SGSN queries the user-negotiated subscription configuration table configured on the SGSN to obtain the configuration information, where the configuration information carries a parameter identifier indicated by the requesting device.

The configuration information is obtained according to the user-negotiated subscription configuration table, and the user-negotiated subscription configuration table is configured on the SGSN beforehand. The configuration information in the user-negotiated subscription configuration table includes but is not limited to the following:
(1) whether the parameter identifier indicated by the requesting device is carried;
(2) an IMSI, an MSISDN (Mobile Subscriber International ISDN, mobile subscriber international ISDN number), and an IMEI (International Mobile Equipment Identity, international mobile equipment identity) number (longest matching);
(3) which types of QoS (MS, SGSN, and GGSN and/or HLR) classes are compared;
(4) selecting a scenario (activation, secondary activation, routing area update, PDP context update that are initiated by the MS, PDP context update that is initiated by the GGSN, or PDP context update that is initiated by the SGSN, and so on);
(5) deciding to compare which types of configuration according to configuration of the APN (Access Point Name, access point name);
(6) configuring no use of subscribed QoS parameters(partly effective parameters);
(7) QoS parameters (at least one of the following parameters: reliability, priority, delay level, maximum throughput, average throughput, traffic class, maximum SDU (Service Data Unit, service data unit) length, uplink-maximum bitrate, uplink-guaranteed bitrate, downlink-maximum bitrate, downlink-guaranteed bitrate, sending sequence, sending error SDU, reserved BER (Bit Error Rate, bit error rate), SDU bit error rate, sending control priority, transfer delay, allocation of reserved priorities, extended downlink-maximum bitrate, extended downlink-guaranteed bitrate, extended uplink-maximum bitrate, extended uplink-guaranteed bitrate, and wireless priority, ...);
(8) a time period (start time and end time, period, or duration).

The above configuration information (1) to (8) is several pieces of parallel configuration information. The user-negotiated subscription configuration table may include all configuration information from (1) to (8), or may also include only part of the configuration information, for example, include only configuration information other than (8). This embodiment does not limit the specific configuration information in the user-negotiated subscription configuration table. In addition, exemplarily, the configuration information (1) in the user-negotiated subscription configuration table carries a parameter identifier indicated by the requesting device; in this case, the SGSN needs to determine, according to the indication of the requesting device, devices participating in negotiation on quality of service, namely, the MS initiating an activation request in this embodiment.

It should be noted that the configuration information may be determined according to the information configured in the user-negotiated subscription configuration table configured on the SGSN. If the configuration information in the user-negotiated subscription configuration table includes (2), the SGSN needs to determine whether the IMSI, MSISDN, and IMEI of the user equipment of the received activation request are in corresponding configuration tables. If so, the devices participating in negotiation on quality of service are determined according to the configuration information in the user-negotiated subscription configuration table, and if not, this mode is not used for negotiation, or vice versa. If the configuration information in the user-negotiated subscription configuration table includes (8), the SGSN determines, according to the time of receiving the activation request, whether the configuration information in the user-negotiated subscription configuration table can be used to determine the devices participating in negotiation on quality of service, and so on.

203: The SGSN obtains the indicated parameter identifier carried by the MS.

Specifically, because the configuration information carries the parameter identifier indicated by the requesting device, the SGSN determines, according to the indicated parameter identifier carried by the MS, the devices participating in negotiation on quality of service. With respect to this step, the MS may carry or not carry an indicated parameter identifier. Herein, exemplarily the MS carries an indicated parameter identifier and the identifier indicates comparison between the QoS requested by the MS and the QoS configured on the SGSN. This embodiment does not limit the mode for the SGSN to obtain the indicated parameter identifier carried by the MS. In actual applications, the MS may carry the indicated parameter identifier through an information element when initiating an activation request to the SGSN, or may also obtain the indicated parameter identifier in other procedures.

204: The SGSN determines, according to the indication of the MS, the devices participating in negotiation on quality of service and a negotiation result.

Specifically, because step 203 uses an example in which the identifier carried by the MS indicates comparison between the QoS requested by the MS and the QoS configured on the SGSN, in this step, the SGSN can determine, according to the indication of the MS, that the devices participating in negotiation on quality of service are the MS and the SGSN itself; then when negotiating the negotiation result, may use the lowest quality of service in quality of service of each device participating in negotiation on quality of service as the negotiation result. For example, the quality of service requested by the MS is 63 kbps, and the quality of service configured on the SGSN is 128 kbps, and in this case, the final negotiation result is 63 kbps. Herein exemplarily the negotiation result of the MS and SGSN is 63 kbps. Negotiation may also be performed according to other set rules. For example, the maximum value of quality of service of each device is used as the negotiation result, or the average value of quality of service of each device is used as the negotiation result, which is not limited by this embodiment.

205: The SGSN carries the negotiation result in a create PDP context request and sends the request to the GGSN.

With respect to this step, the SGSN carries the negotiation result indicating 63 kbps in a create PDP context request and sends the request to the GGSN.

206: The SGSN receives a create PDP context response returned by the GGSN.

In this embodiment, exemplarily the GGSN accepts the negotiation result, and therefore, the create PDP context response returned by the GGSN carries the 63 kbps rate.

207: The SGSN returns an activation response to the MS, so that the MS completes activation.

The create PDP context response returned by the GGSN carries the negotiation result indicating 63 kbps of the MS and SGSN. Therefore, when the SGSN returns an activation response to the MS, the SGSN carries the negotiation result in the activation response and sends the negotiation result and response together to the MS, so that the MS completes activation.

Further, after the MS completes activation, devices such as the GGSN, MS, and SGSN may initiate a PDP context update to modify the rate. Therefore, this embodiment is described by only using an example in which the GGSN initiates a PDP context update, and the details are given in the subsequent steps.

208: The GGSN initiates an update PDP context request for modifying quality of service to a 256 kbps rate.

With respect to this step, same as the case that the MS initiates activation, the GGSN may also carry an indicated parameter identifier when initiating a PDP context update. This embodiment also does not limit the mode of carrying an indicated parameter identifier by the GGSN. In actual applications, the GGSN may also carry the indicated parameter identifier through an information element sent to the SGSN. This embodiment is described only by using an example in which the GGSN initiates a PDP context update and requests to modify quality of service to a 256 kbps rate and the GGSN carries no indicated parameter identifier.

209: The SGSN determines that the configuration information carries a parameter identifier indicated by the requesting device.

This step is similar to step 202 and is not further described herein. Still using an example in which the SGSN carries a parameter identifier indicated by the requesting device, the SGSN determines, according to the indication of the GGSN, the devices participating in negotiation on quality of service, which is described in detail in the subsequent steps.

210: The GGSN carries no indicated parameter identifier, and the SGSN determines, according to the indication in the configuration information, the devices participating in negotiation on quality of service and the negotiation result.

With respect to this step, the configuration information obtained by the SGSN carries the parameter identifier indicated by the requesting device, which means that the SGSN needs to determine, according to the indication of the requesting device GGSN, the devices participating in negotiation on quality of service. However, the GGSN carries no indicated parameter identifier, that is, the GGSN does not indicate the devices participating in negotiation on quality of service. With respect to this case, the method provided by this embodiment may determine, according to the indication of the home location register HLR, the devices participating in negotiation on quality of service; if the HLR does not indicate the devices participating in negotiation on quality of service, the method determines, according to the indication of configuration information, the devices participating in negotiation on quality of service.

This embodiment also does not limit the mode of carrying an indication by the HLR, and only uses an example in which an indication is added by using an existing information element during subscription in the HLR, for example, a charging attribute. In this case, the SGSN can know, after obtaining the information element during subscription in the HLR, whether the HLR carries an indication. This step uses an example in which the HLR does not indicate the devices participating in negotiation on quality of service. In this case, the SGSN queries the configuration information in the user-negotiated subscription configuration table to confirm, according to configuration of the SGSN, that the requesting IMSI number satisfies the condition, that the APN satisfies the condition, and that the scenario satisfies the condition. The SGSN obtains the configured device negotiation. Taking negotiation with the GGSN as an example, the SGSN uses quality of service requested by the GGSN as the negotiation result.

211: The SGSN carries the negotiation result in a modify PDP context request and sends the request to the MS, so that the MS modifies the PDP context according to the negotiation result.

The SGSN returns the negotiation result of 256 kbps rate quality of service to the MS, so that the MS modifies the rate. The MS returns a modify PDP context response to the SGSN after the MS accepts the negotiation result and completes modification of the PDP context.

212: The SGSN receives the modify PDP context response returned from the MS, and returns a PDP context update response to the GGSN.

It should be noted that this embodiment only uses an example in which the GGSN initiates a QoS modification request, that is, the GGSN requests to modify QoS. Not only the GGSN but also the MS can request to modify QoS, that is, initiate a QoS modification request.

In the case that the MS requests to modify QoS:

If the MS initiates a QoS modification request, the requested QoS takes effect once in the procedure. In the subsequent process, if the SGSN initiates a QoS modification procedure, QoS negotiation is still performed by using the configured negotiation method; if the QoS requested by the MS is not selected, even if the MS initiates a QoS modification request, the requested QoS does not take effect, and the parameter is not used during QoS negotiation.

In the case that the GGSN requests to modify QoS:

If the GGSN initiates a QoS modification request, the requested QoS is effective for a long time. In the subsequent process, if the SGSN initiates a QoS modification procedure, negotiation is performed based on the QoS requested by the GGSN. In this control mode, the GGSN instead of the MS decides QoS. Once the MS activates the PDP context, the GGSN decides to select the corresponding QoS for the user according to the actual application, and delivers the QoS to the SGSN, and the SGSN returns the QoS to the MS.

By using the method provided by this embodiment, devices participating in negotiation on quality of service are determined according to configuration information, and the corresponding quality of service is determined according to the negotiation result of the devices participating in negotiation on quality of service, thereby not being limited to the subscription result of the HLR. Therefore, flexible management is implemented for quality of service, better quality of service is provided to the user, and the user experience is improved.

### Embodiment 3

This embodiment provides a method for managing quality of service. To make the SGSN not be limited to the negotiation result of QoS requested by devices such as the MS/GGSN, QoS subscribed in the HLR, and QoS configured on the SGSN, the method, under the condition of satisfying the SGSN configuration scenario, can be used to implement configuration according to the negotiation result of one or more of: the QoS requested by the MS/GGSN, QoS subscribed in the HLR, and QoS configured on the SGSN. Therefore, the SGSN involved in this embodiment has a user unitized subscription negotiation function, and therefore implements flexible management for quality of service without being limited to the subscription result of the HLR.

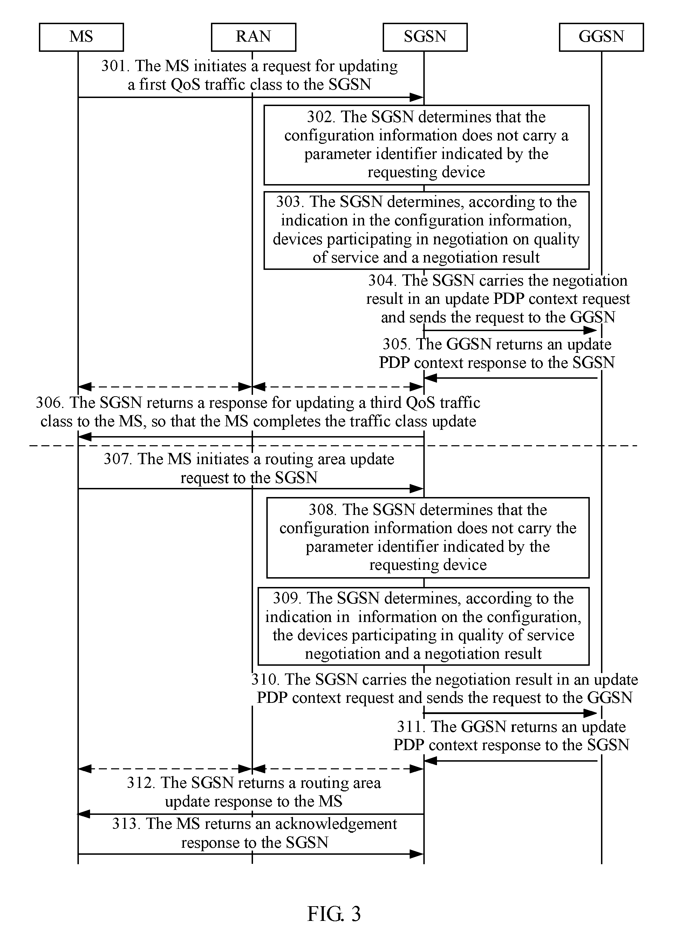

For ease of description, in this embodiment, the method provided by this embodiment is described in detail by using an example in which an MS with an MSISDN being 460070000000001 in an UMTS system initiates a quality of service class update. Referring to FIG. 3, the procedure of the method provided in this embodiment is as follows:

301: The MS initiates a request for updating a first QoS traffic class to the SGSN.

With respect to this step, quality of service can be indicated by not only the specific value but also the traffic class (Traffic Class). In actual applications, there are multiple traffic classes. This embodiment does not limit the specific traffic class initiated by the MS, and only uses an example in which the MS initiates an update of a first QoS traffic class for description, that is, the MS requests to update quality of service to the first QoS class.

302: The SGSN determines that the configuration information does not carry a parameter identifier indicated by the requesting device.

The configuration information is obtained according to the user-negotiated subscription configuration table, and the user-negotiated subscription configuration table is configured on the SGSN beforehand. For the configuration information in the user-negotiated subscription configuration table, reference may be made to step 202 in the second embodiment, and no repeated description is provided herein. In addition, exemplarily the configuration information does not carry the parameter identifier indicated by the requesting device.

303: The SGSN determines, according to the indication in the configuration information, devices participating in negotiation on quality of service and a negotiation result.

Specifically, the SGSN determines that the configuration information does not carry the parameter identifier indicated by the requesting device, which means that it is unnecessary to determine, according to the indication of the requesting device, the devices participating in negotiation on quality of service. Therefore, in this step, the SGSN determines, according to the indication in the configuration information, the devices participating in negotiation on quality of service.

As may be seen from the configuration information in step 202 in the second embodiment, both (3) and (5) can indicate that quality of service of which types of devices is compared. Therefore, if the content indicated by (3) and the content indicated by (5) are the same, the devices participating in negotiation on quality of service can be determined according to the indication in (3) or (5); if the content indicated by (3) and the content indicated by (5) are not the same, an indication is selected from (3) and (5) according to preference order, and the devices participating in negotiation on quality of service are determined according to the selected indication, for example, (3) is preferable or (5) is preferable, which is not limited by this embodiment. Exemplarily, the SGSN determines, according to the indication in the configuration information, that the requesting IMSI number satisfies the condition, that the APN satisfies the condition, and that the scenario satisfies the condition, and after obtaining the configured device negotiation, determines that the devices participating in negotiation on quality of service include the MS, HLR, and SGSN, and the negotiation result is a third QoS traffic class. Because the update is a traffic class update and the SGSN already stores the subscription data of the HLR, the SGSN does not need to interact with the HLR any longer.

304: The SGSN carries the negotiation result in an update PDP context request and sends the request to the GGSN.

The negotiation result is a third QoS traffic class, and therefore the SGSN carries the third QoS traffic class in the update PDP context request and sends the request to the GGSN.

305: The GGSN returns an update PDP context response to the SGSN.

Specifically, this embodiment uses an example in which the GGSN accepts the negotiation result, and the PDP context update response returned by the GGSN to the SGSN carries the third QoS traffic class.

306: The SGSN returns a response for updating the third QoS traffic class to the MS, so that the MS completes the traffic class update.

With respect to this step, after the MS completes the traffic class update, next, this embodiment uses an example in which the MS initiates a routing area update to the SGSN for describing the method provided by this embodiment, which is described in detail in the subsequent steps.

307: The MS initiates a routing area update request to the SGSN.

The routing area update includes an inter-SGSN routing area update and an intra-SGSN routing area update. Herein only the intra-SGSN routing area update is used as an example for description.

308: The SGSN determines that the configuration information does not carry the parameter identifier indicated by the requesting device.

With respect to this step, the SGSN determines that the configuration information does not carry the parameter identifier indicated by the requesting device, which means that it is unnecessary to determine, according to the indication of the requesting device, the devices participating in negotiation on quality of service. Therefore, the SGSN may further determine, according to the indication carried by the HLR, the devices participating in negotiation on quality of service. If the HLR does not provide the indication, the SGSN determines, according to the indication in the configuration information, the devices participating in negotiation on quality of service. In this embodiment, exemplarily the SGSN determines, according to the indication in the configuration information, the devices participating in negotiation on quality of service. Details are given in the subsequent steps.

309: The SGSN determines, according to the indication in the configuration information, the devices participating in negotiation on quality of service and a negotiation result.

Specifically, if the SGSN determines, according to the indication in the configuration information, the devices participating in negotiation on quality of service, the details are the same as the description in step 303, and are not further described herein.

This embodiment uses an example in which the SGSN confirms, according to configuration information, that the requesting IMSI number satisfies the condition, that the APN satisfies the condition, and that the scenario satisfies the condition, and determines that the devices participating in negotiation on quality of service are the MS and the SGSN. Therefore, the negotiation result is determined according to the negotiation of the MS and the SGSN. Herein exemplarily the negotiation result is the first QoS traffic class.

310: The SGSN carries the negotiation result in an update PDP context request and sends the request to the GGSN.

With respect to this step, because the update is a routing area update, the SGSN needs to notify the negotiation result to the GGSN after determining the negotiation result.

311: The GGSN returns an update PDP context response to the SGSN.

This embodiment uses an example in which the GGSN accepts the negotiation result, and the PDP context update response returned by the GGSN carries the first QoS traffic class.

312: The SGSN returns a routing area update response to the MS.

Specifically, the routing area update response returned by the SGSN to the MS carries the first QoS traffic class, based on which the MS completes the routing area update.

313: The MS returns an acknowledgement response to the SGSN.

By using the method provided by this embodiment, devices participating in negotiation on quality of service are determined according to configuration information, and the corresponding quality of service is determined according to the negotiation result of the devices participating in negotiation on quality of service, thereby not being limited to the subscription result of the HLR. Therefore, flexible management is implemented for quality of service, better quality of service is provided to the user, and the user experience is improved.

### Embodiment 4

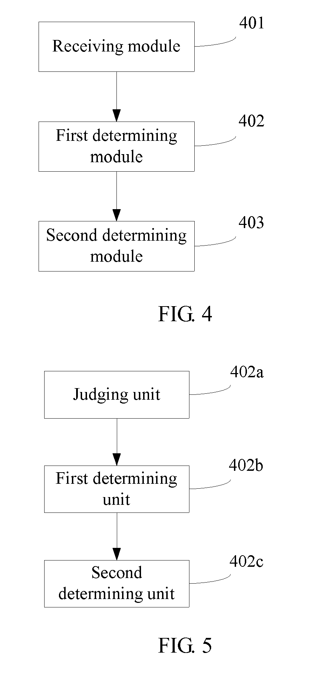

This embodiment provides a device for managing quality of service. As shown in FIG. 4, the device includes:
a receiving module 401, configured to receive a service request;
a first determining module 402, configured to: after the receiving module 401 receives the service request, determine, according to configuration information, devices participating in negotiation on quality of service; and
a second determining module 403, configured to determine, according to a negotiation result of the devices participating in negotiation on quality of service which are determined by the first determining module 402, quality of service corresponding to the service request.

The service request includes but is not limited to an activation request, a secondary activation request, a routing area update request, an update PDP context request initiated by an MS, an update PDP context request initiated by a GGSN, and an update PDP context request initiated by an SGSN, which are not limited by this embodiment.

The configuration information is obtained according to the user-negotiated subscription configuration table. For details, reference may be made to step 202 in the second embodiment.

As shown in FIG. 5, the first determining module 402 includes:
a judging unit 402a, configured to determine, according to the configuration information, whether devices participating in negotiation on quality of service are indicated by a request initiating device; and
a first determining unit 402b, configured to: after the judging unit 402a determines that the devices participating in negotiation on quality of service are indicated by the request initiating device, determine, according to the indication of the request initiating device, the devices participating in negotiation on quality of service; or
a second determining unit 402c, configured to: after the judging unit 402a determines that the devices participating in negotiation on quality of service are not indicated by the request initiating device, determine, according to an indication in the configuration information, the devices participating in negotiation on quality of service.

The judging unit 402a is configured to determine whether the configuration information carries a parameter identifier indicated by the device; and if so, determine that the devices participating in negotiation on quality of service are indicated by the request initiating device.

Further, the first determining unit 402b is configured to: if the request initiating device does not indicate the devices participating in negotiation on quality of service, determine, according to an indication of a home location register, the devices participating in negotiation on quality of service.

The first determining unit 402b is further configured to: if the home location register does not indicate the devices participating in negotiation on quality of service, determine, according to the indication in the configuration information, the devices participating in negotiation on quality of service.

Specifically, the device provided by this embodiment for managing quality of service may be an SGSN, or may be a GGSN, a PCRF, an RNC, and so on, which is not limited by this embodiment.

By using the device provided by this embodiment, devices participating in negotiation on quality of service are determined according to configuration information, and the corresponding quality of service is provided according to the negotiation result of the devices participating in negotiation on quality of service, without being limited to the subscription result of the HLR. Thereby, flexible management is implemented for quality of service, better quality of service is provided to the user, and the user experience is improved.

An embodiment of the present invention further provides a system for managing quality of service, where the system includes any one of the above devices for managing quality of service, which is not further described herein.

It should be noted that: when the device provided by the above embodiment for managing quality of service manages quality of service, the division of the above functional modules is described as only an example; in actual applications, the above functions may be provided to different functional modules for implementation according to requirements, that is, the internal structure of the device is divided into different functional modules for implementing all or part of the above described functions. In addition, the embodiment of the device for managing quality of service and the embodiment of the method for managing quality of service belong to the same conception. The specific implementation process is described in the method embodiment and is not further described herein.

Serial numbers of the foregoing embodiments of the present invention are only used for description, but do not indicate preference of the embodiments.

All or part of the steps in the embodiments of the present invention may be implemented by using software, and a corresponding software program may be stored in a readable storage medium, such as an optical disk or a hard disk.

The foregoing descriptions are merely exemplary embodiments of the present invention, but are not intended to limit the present invention. Any modification, equivalent replacement, or improvement made within the spirit and principle of the present invention shall fall within the protection scope of the present invention.

## Claims

1. A method for managing quality of service, comprising:
receiving a service request;
determining, according to configuration information, devices participating in negotiation on quality of service; and
determining, according to a negotiation result of the devices participating in negotiation on quality of service, quality of service corresponding to the service request.

2. The method according to claim 1, wherein the configuration information is obtained according to a user-negotiated subscription configuration table.

3. The method according to claim 1, wherein the determining, according to configuration information, devices participating in negotiation on quality of service comprises:
determining, according to the configuration information, whether the devices participating in negotiation on quality of service are indicated by a request initiating device; and
if so, determining, according to the indication of the request initiating device, the devices participating in negotiation on quality of service; or
if not, determining, according to an indication in the configuration information, the devices participating in negotiation on quality of service.

4. The method according to claim 3, wherein the determining, according to the configuration information, whether the devices participating in negotiation on quality of service are indicated by a request initiating device comprises:
determining whether the configuration information carries a parameter identifier indicated by a requesting device; and
if so, determining that the devices participating in negotiation on quality of service are indicated by the request initiating device.

5. The method according to claim 3, wherein if determining, according to the indication of the request initiating device, the devices participating in negotiation on quality of service, the method further comprises:
if the request initiating device does not indicate the devices participating in negotiation on quality of service, determining, according to an indication of a home location register, the devices participating in negotiation on quality of service.

6. The method according to claim 5, wherein if determining, according to an indication of a home location register, the devices participating in negotiation on quality of service, the method further comprises:
if the home location register does not indicate the devices participating in negotiation on quality of service, determining, according to the indication in the configuration information, the devices participating in negotiation on quality of service.

7. A device for managing quality of service, comprising:
a receiving module, configured to receive a service request;
a first determining module, configured to: after the receiving module receives the service request, determine, according to configuration information, devices participating in negotiation on quality of service; and
a second determining module, configured to determine, according to a negotiation result of the devices participating in negotiation on quality of service which are determined by the first determining module, quality of service corresponding to the service request.

8. The device according to claim 7, wherein the first determining module comprises:
a judging unit, configured to determine, according to the configuration information, whether the devices participating in negotiation on quality of service are indicated by a request initiating device; and
a first determining unit, configured to: after the judging unit determines that the devices participating in negotiation on quality of service are indicated by the request initiating device, determine, according to the indication of the request initiating device, the devices participating in negotiation on quality of service; or
a second determining unit, configured to: after the judging unit determines that the devices participating in negotiation on quality of service are not indicated by the request initiating device, determine, according to an indication in the configuration information, the devices participating in negotiation on quality of service.

9. The device according to claim 8, wherein the judging unit is configured to determine whether the configuration information carries a parameter identifier indicated by a requesting device; and if so, determine that the devices participating in negotiation on quality of service are indicated by the request initiating device.

10. The device according to claim 8, wherein the first determining unit is further configured to: if the request initiating device does not indicate the devices participating in negotiation on quality of service, determine, according to an indication of a home location register, the devices participating in negotiation on quality of service.

11. The device according to claim 10, wherein the first determining unit is further configured to: if the home location register does not indicate the devices participating in negotiation on quality of service, determine, according to the indication in the configuration information, the devices participating in negotiation on quality of service.

12. A system for managing quality of service, wherein the system comprises the device according to any one of claims 7 to 11.
